# EUROPÄISCHE PATENTANMELDUNG

(11) **EP 4 830 867 A1**
(43) Veröffentlichungstag der Anmeldung: **28.10.2026**
(21) Anmeldenummer: 26162825.9
(22) Anmeldetag: 06.03.2026
(51) Int. Cl.: B23P 6/00

(54) **WERKZEUGMASCHINE ZUR BEARBEITUNG EINER DIAPHRAGMA-DICHTUNG**

(30) Priorität: 23.04.2025 DE 202025102197 U
(71) Anmelder: HSOS Industrial Services GmbH, 58300 Wetter (DE)
(72) Erfinder: Geißler, Peter, 58300 Wetter (DE)
(74) Vertreter: RGTH

(57) **Zusammenfassung**

Die Erfindung betrifft eine Werkzeugmaschine (100) zur Bearbeitung, insbesondere zur Instandsetzung, einer Diaphragma-Dichtung (50) eines Flansches (51), die im montierten Zustand eine Diaphragma-Platte (52) aufweist, die mittels einer Schweißnaht (53) an einer Dichtfläche des Flansches (51) fixiert ist, mit einem Gestell (54), das einen stationären Teil (55) und einen beweglichen Teil (56) umfasst, wobei der stationäre Teil (55) zur mittelbaren oder unmittelbaren Montage der Werkzeugmaschine (100) an dem Flansch (51) ausgebildet ist und an dem beweglichen Teil (56) ein Werkzeugträger (57) angeordnet ist. Erfindungsgemäß ist vorgesehen, dass der Werkzeugträger (57) als Werkzeugadapter (571) zur Aufnahme unterschiedlicher Werkzeuge (58) ausgebildet ist und das Gestell (54) mehrere Achsen (591, 592, 593, 594) aufweist, die einen Bearbeitungsraum (60) aufspannen, jeweils als Linearführung (61) ausgebildet sind und über mehrere verfahrbare Schlitten (621, 622, 623) derart zueinander ausgerichtet und miteinander verbunden sind, dass der Werkzeugadapter (571) im montierten Zustand der Werkzeugmaschine (100) innerhalb des Bearbeitungsraums (60) entlang einer beliebigen dreidimensionalen Trajektorie verfahrbar ist.

## Beschreibung

Die Erfindung betrifft eine Werkzeugmaschine zur Bearbeitung, insbesondere zur Instandsetzung, einer Diaphragma-Dichtung eines Flansches, die im montierten Zustand eine Diaphragma-Platte aufweist, die mittels einer Schweißnaht an einer Dichtfläche des Flansches fixiert ist, mit einem Gestell, das einen stationären Teil und einen beweglichen Teil umfasst, wobei der stationäre Teil zur mittelbaren oder unmittelbaren Montage der Werkzeugmaschine an dem Flansch ausgebildet ist und an dem beweglichen Teil ein Werkzeugträger angeordnet ist.

### Technologischer Hintergrund

Aus der petrochemischen Industrie sind sog. Diaphragma-Dichtungen bekannt, mit denen Behälter, wie beispielsweise Wärmetauscher, abgedichtet werden. Eine Diaphragma-Dichtung besteht im Wesentlichen aus einer metallischen Diaphragma-Platte, die auf einer Dichtfläche eines Flansches rundumlaufend verschweißt ist. Typischerweise besitzen Diaphragma-Platten der hier angesprochenen Art einen Durchmesser von ca. 1,4 m bis 2,2 m und weisen in der Regel eine Masse von mehr als 100 kg auf.

Bei Revisionen und/oder betriebsbedingten Abstellungen der Anlage, beispielsweise zur Reinigung des Behälterinneren, müssen diese Diaphragma-Platten vom Behälter entfernt werden. Hierzu muss zunächst die verbindende Schweißnaht vollständig entfernt werden. Die Schweißnaht kann dabei als Kehlnaht ausgeführt sein. Wenn die Diaphragma-Platte zumindest abschnittsweise in einem Rezess, also innerhalb einer dichtflächenseitigen Vertiefung des Flansches ruht, kann die Schweißnaht zusätzlich als I-Fuge ausgeführt sein. Ferner muss in manchen Fällen, nach der Entfernung der Diaphragma-Platte, die Dichtfläche und/oder die Auflagefläche am Behälter überarbeitet werden, was insbesondere das Egalisieren, das Entfernen von Schweißgutresten, und die Wiederherstellung der Geometrie umfassen kann. Sollte die Dichtfläche beispielsweise durch Risse oder aufgrund einer früheren Bearbeitung zu dünn oder beschädigt sein, muss vor der Dichtflächenbearbeitung eine Auftragsschweißung (Cladding) erfolgen.

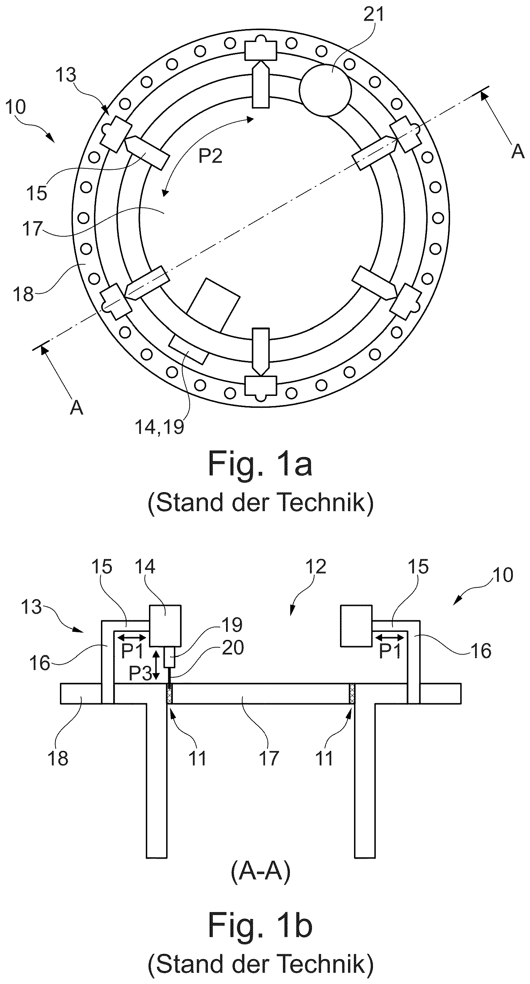

Die Fig. 1a, b zeigen in einer Draufsicht (Fig. 1a) und einer Seitenansicht (Fig. 1b) entlang der Querschnittsebene A-A eine nach dem Stand der Technik bekannte mobile Maschine 10, mit der die Schweißnaht 11 einer Diaphragma-Dichtung 12 in herkömmlicher Weise entfernt wird. Die Maschine 10 besitzt einen stationären Teil 13 und einen rotierenden Teil 14. Die Maschine 10 ist über eine Vielzahl an Ausrichtelementen 15 an Stehbolzen 16 montiert, die flanschseitig angeordnet, die Diaphragma-Platte 17 ringförmig umgreifen und zum Ausrichten in Pfeilrichtung P1 eingerichtet sind. Sofern die Stehbolzen 16 bereits vom Flansch 18 entfernt sind, sind (nicht gezeigte) Adapter bekannt, die in Bolzengewinden der Stehbolzen 17 verschraubt sind. Die Ausrichtung der Maschine 10 erfolgt vorzugsweise mittels einer Messuhr am Bauteil, d.h. entweder am Flansch 18 oder an der Diaphragma-Platte 17. Der rotierende Teil 14 weist einen Werkzeughalter 19 mit einem Drehmeißel 20 auf und wird mittels einer Antriebseinheit 21 entlang des stationären Teils 13 ringförmig in Pfeilrichtung P2 um die Diaphragma-Platte 17 geführt. Dabei ist der Drehmeißel 20 mit der Schweißnaht 11 in Eingriff und wird mit einem kontinuierlichen Vorschub in Behälterrichtung P3 betrieben, so dass die vollständige Schweißnaht 11 entfernt wird.

Nach dem vollständigen Entfernen der Schweißnaht 11 wird diese erste Maschine 10 demontiert, um die Diaphragma-Platte 17 abnehmen zu können. Danach muss wiederum eine (nicht gezeigte) zweite Maschine montiert werden, um die Dichtfläche des Flansches 18 zu bearbeiten.

Sollte es erforderlich sein, die Dichtfläche instand zu setzen, wird partiell oder vollumfänglich manuell aufgeschweißt, bevor die maschinelle Dichtflächenbearbeitung mittels der zweiten Maschine erfolgen kann.

Die nach dem Stand der Technik bekannten Maschinen haben sich in mehrfacher Hinsicht als nachteilbehaftet herausgestellt.

Die Ausrichtung der ersten und der zweiten Maschine kann nur manuell innerhalb der jeweiligen Toleranz der Messmittel, Maschine und Befestigung zur behälterseitigen Dichtfläche und/oder zur Diaphragma-Platte erfolgen. Daher erfolgt in der Regel eine überhöhte Materialabnahme sowohl an der behälterseitigen Dichtfläche als auch an der Diaphragma-Platte, die aufgrund des Einbrandes beim Schweißen verkleinert werden muss. Aus diesem Grund beschränken die Behälterhersteller die maximale Anzahl derartiger Bearbeitungen in der Regel auf 2-3 Stück. Danach muss entweder die Dichtfläche vollständig erneuert oder der Behälterflansch getauscht werden, was mit einem hohen Material- und Montageaufwand verbunden ist.

Die herkömmlichen Maschinen arbeiten mit Drehmeißeln, die mit einer kontinuierlichen Rotation entlang des statischen Teils und einem kontinuierlichen Vorschub in Behälterrichtung geführt werden, um dabei Material abzutragen. Das Material wird solange abgetragen, bis die Diaphragma-Platte abfällt. Es ist möglich, dass sich noch Restdruck oder Restprodukt im Behälter befindet oder die Diaphragma-Platte aufgrund des Schweißprozesses eine Restspannung aufweist, was beides zu einem plötzlichen Abfallen/Springen der Diaphragma-Platte führen kann. Der Bediener der Maschine befindet sich regelmäßig frontal vor der Maschine und ist aufgrund des unvorhersehbaren Abfallens der Diaphragma-Platte regelmäßig einem potentiellen Verletzungsrisiko ausgesetzt. Auch ohne einen verbliebenen Restdruck innerhalb des Wärmetauschers verbleibt eine Verletzungsrisiko beim Herabfallen der Diaphragma-Platte, die mit einer herkömmlichen Maschine entfernt wird.

Fällt die Diaphragma-Platte, muss die Maschine händisch in kürzester Zeit gestoppt werden, um ein Herumschlagen oder Verkeilen der Diaphragma-Platte zwischen dem Wärmetauscher und der Maschine zu verhindern. Grundsätzlich ist das Abfallen von Diaphragma-Platten mit einer Masse von teilweise über 100 kg immer eine Gefahr, insbesondere auch weil die Bearbeitungen zum Teil in Höhen von bis zu 20 m durchgeführt werden.

Die Maschinen müssen, um die jeweilige Bearbeitung durchzuführen zu können, mit ihrem statischen Teil vor dem Behälter oder am Behälter verklemmt werden. Die Bedienung der Maschinen erfolgt per Hand. Oft wird dies im laufenden Betrieb der Maschine erledigt. Selbst wenn die Maschine für jede Einstellungsänderung angehalten wird, besteht ein Verletzungsrisiko, wenn der Bediener per Hand in das rotierende System eingreift.

Üblicherweise muss zumindest eine Teilmenge der um die Diaphragma-Platte befestigten Stehbolzen für die Bearbeitung entfernt werden. In der Regel sind auch manche der Stehbolzengewinde beschädigt und müssen mit einem anderen Verfahren zeit- und arbeitsaufwändig repariert werden, weil die ersten und zweiten Maschinen diese Instandhaltung nicht ausführen können.

Ist die Diaphragma-Platte zusätzlich mit einer I-Fuge verschweißt, verlängert sich die Bearbeitungsdauer mit einer herkömmlichen Maschine aufgrund des verlängerten Werkzeugs erheblich und der Verschleiß an Drehmeißeln oder Wendeplatten erhöht sich deutlich. Um genügend Stabilität für das Eintauchen zu erreichen, muss verhältnismäßig breit, in der Regel bis zu 10 mm, eingestochen werden, was mit entsprechendem Materialverlust verbunden ist.

Die Bearbeitungsdauer mittels einer herkömmlichen Maschine variiert je nach der gegebenen Situation vor Ort, der Erfahrung des Bedieners und dem Durchmesser der Diaphragma-Platte erheblich. Inklusive der Montage und dem Ausrichten der Maschine wird für das Abtrennen einer Diaphragma-Platte mit einem Durchmesser von 1,5 m bis 2 m eine Bearbeitungsdauer von ca. 12 Stunden einkalkuliert. Anschließend muss die Diaphragma-Platte entfernt werden, wozu bei einer herkömmlichen Bearbeitung die Demontage der Drehmaschine erforderlich ist. Nach dem Entfernen der Diaphragma-Platte muss die zweite Maschine montiert werden, um die Behälterdichtfläche zu bearbeiten, wofür erfahrungsgemäß weitere 10 bis 12 Stunden einkalkuliert werden. Bei der manuellen Montage der zweiten Maschine sind weitere Ungenauigkeiten in Bezug auf die Ausrichtung zu erwarten, was den Fehler durch das manuelle Einmessen insgesamt verdoppelt.

Die herkömmliche Maschine kann nur am Flanschblatt oder an der Diaphragma-Platte in einer Ebene ausgerichtet werden. Das Flanschblatt oder die Diaphragma-Platte können uneben sein. Weiterhin kann die Diaphragma-Platte auch schräg zur Dichtfläche bzw. zum Cladding eingeschweißt sein. Um möglichst wenig Material der Dichtfläche abzutragen, ist in diesen Fällen ein "Herantasten" an die Dichtfläche vorgesehen, zu der die herkömmliche Maschine gegebenenfalls mehrfach in wechselnder Bearbeitungsebene ausgerichtet werden muss. Eine unmittelbare Berücksichtigung der möglichen Unebenheiten bei der Ausrichtung der Maschine ist nicht möglich.

Sollte es notwendig oder erforderlich sein, die Behälterdichtfläche nachzuschweißen, beispielsweise durch das Auftragsschweißen (Cladding), lastet auf den Schweißern ein großer Zeitdruck bei einer gleichzeitig hohen Qualitätsanforderung, weil die genannten Überarbeitungen in der Regel auf einen entsprechenden Befund beschlossen werden und nicht zuvor planbar sind. Vor jedem manuellen Cladding muss die Maschine für die Dichtflächenbearbeitung demontiert und danach remontiert werden. Durch das manuelle Schweißen, das teilweise auch in einer Zwangslage erfolgen muss, entstehen häufiger Lunker. Diese Fehlstellen werden ggfls. erst nach der erneuten maschinellen Bearbeitung sichtbar, und machen eine Wiederholung des Prozesses notwendig.

Auch die erforderliche Auftragsdicke des Schweißguts kann durch den Schweißer nicht verlässlich abgeschätzt, gemessen und/oder eingehalten werden. Durch die so entstehende, ungleichmäßige Auftragsschweißung wird die nachfolgende mechanische Bearbeitung anspruchsvoll und zeitaufwändig. Ferner unterliegen die Bearbeitungswerkzeuge durch den unterbrochenen Schnitt einem höheren Verschleiß. Zu dünne Auftragshöhen werden teilweise erst nach der erneuten mechanischen Bearbeitung erkennbar.

Insgesamt ist die Instandsetzung von Diaphragma-Dichtungen, insbesondere das Entfernen einer Diaphragma-Platte und das Herrichten einer überarbeiteten flanschseitigen Dichtfläche zur Montage einer neuen oder einer überarbeiteten Diaphragma-Platte mit herkömmlichen Maschinen nachteilbehaftet. Insbesondere ist die herkömmliche Bearbeitung arbeitsaufwändig, verschleißanfällig und mit einem erheblichen Verletzungsrisiko verbunden.

### Darstellung der Erfindung: Aufgabe, Lösung, Vorteile

Hiervon ausgehend, ist es die Aufgabe der vorliegenden Erfindung, eine Werkzeugmaschine zur Bearbeitung, insbesondere zur Instandsetzung, von Diaphragma-Dichtungen vorzuschlagen, die die vorgenannten Nachteile behebt. Die Bearbeitung soll dabei insbesondere die Entfernung einer Diaphragma-Dichtung und die Herrichtung einer überarbeiteten flanschseitigen Dichtfläche zur Montage einer neuen oder überarbeiteten Diaphragma-Platte umfassen. Insbesondere soll die Werkzeugmaschine die Instandsetzung einer Diaphragma-Dichtung mit einem geringen Arbeitsaufwand, einem geringen Verschleiß der verwendeten Werkzeuge und einem geringen Verletzungsrisiko erlauben.

Diese Aufgabe wird durch die Werkzeugmaschine nach Anspruch 1 gelöst.

Der Ausgangspunkt der Erfindung ist eine Werkzeugmaschine zur Bearbeitung, insbesondere zur Instandsetzung, einer Diaphragma-Dichtung eines Flansches, die im montierten Zustand eine Diaphragma-Platte aufweist, die mittels einer Schweißnaht an einer Dichtfläche des Flansches fixiert ist, mit einem Gestell, das einen stationären Teil und einen beweglichen Teil umfasst, wobei der stationäre Teil zur mittelbaren oder unmittelbaren Montage der Werkzeugmaschine an dem Flansch ausgebildet ist und an dem beweglichen Teil ein Werkzeugträger angeordnet ist.

Hiervon ausgehend ist erfindungsgemäß vorgesehen, dass der Werkzeugträger als Werkzeugadapter zur Aufnahme unterschiedlicher Werkzeuge ausgebildet ist und das Gestell mehrere Achsen aufweist, die einen Bearbeitungsraum aufspannen, jeweils als Linearführung ausgebildet sind und über mehrere verfahrbare Schlitten derart zueinander ausgerichtet und miteinander verbunden sind, dass der Werkzeugadapter im montierten Zustand der Werkzeugmaschine innerhalb des Bearbeitungsraums entlang einer beliebigen dreidimensionalen Trajektorie verfahrbar ist.

Hierdurch wird eine Werkzeugmaschine vorgeschlagen, die zur Bearbeitung, insbesondere zur Instandsetzung, von Diaphragma-Dichtungen ausgestaltet ist und die die vorgenannten Nachteile behebt. Die mögliche Bearbeitung umfasst insbesondere die Entfernung einer Diaphragma-Dichtung und die Herrichtung einer überarbeiteten flanschseitigen Dichtfläche zur Montage einer neuen oder einer überarbeiteten Diaphragma-Platte. Insbesondere erlaubt die Werkzeugmaschine die Instandsetzung einer Diaphragma-Dichtung mit einem geringen Arbeitsaufwand, einem geringen Verschleiß der verwendeten Werkzeuge und einem geringen Verletzungsrisiko.

Ein besonderer Vorteil der erfindungsgemäßen Werkzeugmaschine bei der Entfernung der Diaphragma-Platte ist, dass die Konturen der Schweißnaht segmentweise bearbeitet werden können. So kann zu Beginn der Bearbeitung die Schweißnaht entlang eines ersten Teilbereichs entfernt werden. Anschließend kann die Platte gegen das Herabfallen gesichert werden, beispielsweise indem die Diaphragma-Platte mittels eines Kettenzugs, eines Keils, eines hydraulischen Stempels oder eines sonstigen lösbaren Befestigungsmittels verspannt wird, bevor der Rest der Schweißnaht entfernt und damit die Diaphragma-Platte vollständig vom Flansch gelöst wird. So kann sich die Diaphragma-Platte auch nach einer vollständigen Entfernung der Schweißnaht nicht ungewollt ablösen und herunterfallen und stellt somit kein Sicherheitsrisiko für den Bediener dar.

Vorteilhafte Weiterbildungen der Erfindung werden nachfolgend und in den Unteransprüchen angegeben.

Nach einer vorteilhaften Weiterbildung der Erfindung ist vorgesehen, dass das Gestell mindestens drei Achsen aufweist, die vorzugsweise jeweils parallel zu den Achsen eines kartesischen Koordinatensystems angeordnet sind, dessen x-y-Ebene im montierten Zustand der Werkzeugmaschine vorzugsweise parallel zur Dichtfläche des Flansches ausgerichtet ist. Durch die rechtwinklige Anordnung der Achsen zueinander ergibt sich eine besonders einfache Steuerung der einzelnen Schlitten, so dass der Werkzeugadapter entlang der gewünschten Trajektorie Verfahren wird.

Die Schlitten weisen vorzugsweise jeweils separate Linearantriebe auf. Solche Linearantriebe sind vorzugsweise als Elektromotoren ausgestaltet, die ein präzises Verfahren der jeweiligen Schlitten erlauben.

Zur Steuerung der Linearantriebe ist vorzugsweise eine Steuereinheit vorgesehen, die insbesondere als eine CNC-Steuereinheit ausgestaltet ist.

Nach einer vorteilhaften Weiterbildung der Erfindung ist vorgesehen, dass
- der stationäre Teil die erste Achse aufweist, auf der der erste Schlitten verfahrbar angeordnet ist,
- der erste Schlitten die zweite Achse trägt, auf der der zweite Schlitten verfahrbar angeordnet ist, und
- der zweite Schlitten die dritte Achse trägt, auf der der dritte Schlitten verfahrbar angeordnet ist und der den Werkzeugadapter trägt.

Dabei weist der stationäre Teil vorzugsweise eine vierte Achse auf, die parallel zu der ersten Achse angeordnet und zur Führung des beweglichen Teils des Gestells ausgebildet ist, wobei die erste Achse und die vierte Achse vorzugsweise über zwei voneinander beabstandete Streben miteinander verbunden sind. Der stationäre Teil ist hierdurch rechteckig, insbesondere quadratisch ausgestaltet und erlaubt hierdurch eine besonders einfache und stabile Montage am Flansch.

Die Werkzeugmaschine weist vorzugsweise einen 3-D-Taster auf, der eingerichtet und ausgerichtet ist, um die Diaphragma-Dichtung und/oder die Flanschoberfläche und/oder die Dichtfläche des Flansches abzutasten. Die aufgenommenen Daten geben Aufschluss über die dreidimensionale Lage der Diaphragma-Dichtung, also insbesondere über den Verlauf, die Stärke (Dicke) und die Position der abzutragenden Schweißnaht. Hierdurch kann die Werkzeugmaschine präzise zur Diaphragma-Dichtung und/oder zur Dichtfläche ausgerichtet werden, womit sich das Risiko von zu viel Materialabtrag durch ein ungenaues Einrichten erheblich reduziert. Hierbei sind in vorteilhafter Weise auch Geometrien der Schweißnaht präzise entfernbar, die von einem kreisförmigen Verlauf abweichen.

Vorzugsweise ist vorgesehen, dass zur mittelbaren Montage der Werkzeugmaschine an dem Flansch ein Rahmen vorgesehen ist, der mittels mehrerer radial beweglich gelagerter Stempel zumindest mittelbar am Flansch verspannbar ist. Der Rahmen besteht dabei beispielsweise aus einer rechteckigen Platte mit einem runden Ausschnitt, der im montierten Zustand entlang seiner inneren Umfangslinie vollständig radial von dem Flansch beabstandet ist. Hierdurch ist die Montage der Werkzeugmaschine nicht von der Orientierung des Flansches abhängig und die Werkzeugmaschine kann insbesondere an einem Flansch montiert werden, dessen Stirnfläche winklig, insbesondere schrägwinklig, orthogonal oder parallel, zur Erdoberfläche ausgerichtet ist.

Im montierten Zustand der Werkzeugmaschine ist zumindest die Diaphragma-Platte, vorzugsweise die vollständige Oberfläche des Flansches, innerhalb des Bearbeitungsraums angeordnet. Hierdurch wird gewährleistet, dass alle erforderlichen Bearbeitungen mittels der Werkzeugmaschine durchführbar sind.

Für unterschiedliche Bearbeitungen sind unterschiedliche Werkzeuge vorgesehen, die bedarfsabhängig mit einer unterschiedlichen Drehzahl betrieben werden müssen. Nach einer vorteilhaften Weiterbildung der Erfindung ist daher vorgesehen, dass die Spindeldrehzahl des Werkzeugträgers variabel ist und vorzugsweise zwischen 0,1 U/min und 24.000 U/min, vorzugsweise zwischen 0,1 U/min und 7.200 U/min, einstellbar ist. Zur Einstellung der Spindeldrehzahl weist der Werkzeugadapter vorzugsweise ein Getriebe auf. Dabei ist vorzugsweise vorgesehen, dass die Steuereinheit, insbesondere die CNC-Steuereinheit, zur Regelung der Spindeldrehzahl eingerichtet ist.

Die Werkzeugmaschine ist vorzugsweise drahtlos oder kabelgebundenen mit einer Steuereinrichtung verbindbar. Durch die Möglichkeit der Fernsteuerung des Bearbeitungsvorganges ist sichergestellt, dass der Bediener in sicherem Abstand arbeiten kann.

Nach einer vorteilhaften Weiterbildung ist vorgesehen, dass die Werkzeuge, die von dem Werkzeugadapter aufnehmbar sind, als Frässpindel und/oder als Schweißvorrichtung ausgebildet sind, wobei die Frässpindel vorzugsweise zur Aufnahme eines Fräskopfes und/oder einer Gewindefräse ausgebildet ist und die Schweißvorrichtung vorzugsweise zum Auftragsschweißen ausgebildet ist. Die Frässpindel kann dabei unterschiedliche Fräsköpfe aufnehmen, die für unterschiedliche Bearbeitungen ausgelegt sind. Beispielsweise können von der Frässpindel Fräsköpfe aufgenommen werden, die zur Entfernung einer Kehl-Naht ausgelegt sind. Die Frässpindel kann darüber hinaus auch Fräsköpfe aufnehmen, die zur Entfernung einer I-Fuge ausgelegt sind. Durch den möglichen Werkzeugwechsel können insbesondere beschädigte Gewinde achsparallel überarbeitet werden sowie Anlageflächen für Muttern in einem exakten 90° Winkel zur Achse nachgefräst werden. Hier entfällt die bisherige Notwendigkeit, die herkömmliche Bearbeitungsmaschine für die Schweißnahtentfernung zu demontieren und eine weitere Maschine zu montieren und ggfls. fehlerbehaftet neu einzujustieren. Im Falle des automatisierten Auftragsschweißens der Dichtfläche mittels der Werkzeugmaschine entfallen Schnittstellen zwischen unterschiedlichen Gewerken, der Zeitbedarf für das Auftragsschweißen wird reduziert, die Qualität des Claddings wird erhöht, die vorgegebene Mindestdicke wird exakt eingehalten und die Bearbeitungsmaschine muss nicht zeitaufwändig und fehleranfällig de- und remontiert werden.

Das Gestell der Werkzeugmaschine besteht vorzugsweise aus Aluminiumprofilen, die einerseits eine hinreichende Stabilität liefern und andererseits eine geringe Masse aufweisen, sodass die Werkzeugmaschine in einfacher Weise montierbar ist. Der maximale Strombedarf zum Betreiben der Werkzeugmaschine beträgt vorzugsweise 63 A.

### Figurenliste

Eine konkrete Ausführungsform der Erfindung wird nachfolgend mit Bezug auf die Figuren beschrieben. Es zeigen:
- Fig. 1a, b: eine Maschine nach dem Stand der Technik;

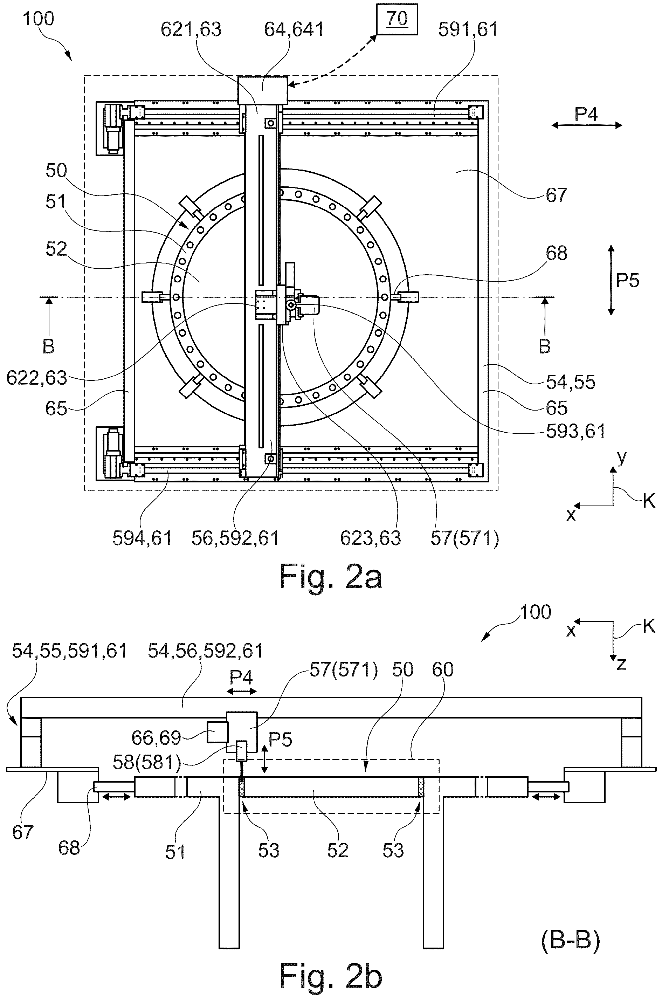

- Fig. 2a, b: eine Werkzeugmaschine in einer Draufsicht und einer Querschnittsansicht entlang der Querschnittsebene B-B.

### Ausführliche Beschreibung der Figuren

Die Werkzeugmaschine 100 ist zur Bearbeitung, insbesondere zur Instandsetzung, einer Diaphragma-Dichtung 50 eines Flansches 51 eingerichtet, die im montierten Zustand eine Diaphragma-Platte 52 aufweist, die mittels einer Schweißnaht 53 an einer Dichtfläche des Flansches 51 fixiert ist. Die Werkzeugmaschine 100 besitzt ein Gestell 54, das einen stationären Teil 55 und einen beweglichen Teil 56 umfasst, wobei der stationäre Teil 54 zur mittelbaren oder unmittelbaren Montage der Werkzeugmaschine 100 an dem Flansch 51 ausgebildet ist und an dem beweglichen Teil 56 ein Werkzeugträger 57 angeordnet ist. Der Werkzeugträger 57 ist als Werkzeugadapter 571 zur Aufnahme unterschiedlicher Werkzeuge 58 ausgebildet und das Gestell 54 weist mehrere Achsen 591, 592, 593, 594 auf, die einen Bearbeitungsraum 60 aufspannen, jeweils als Linearführung 61 ausgebildet sind und über mehrere verfahrbare Schlitten 621, 622, 623 derart zueinander ausgerichtet und miteinander verbunden sind, dass der Werkzeugadapter 571 im montierten Zustand der Werkzeugmaschine 100 innerhalb des Bearbeitungsraums 60 entlang einer beliebigen dreidimensionalen Trajektorie verfahrbar ist. Das Gestell 54 weist die vier Achsen 591, 592, 593, 594 auf, die jeweils parallel zu den Achsen eines kartesischen Koordinatensystems K angeordnet sind, dessen x-y-Ebene parallel zur Dichtfläche des Flansches 51 ausgerichtet ist. Die Schlitten 621, 622, 623 weisen jeweils separate Linearantriebe 63 auf, so dass die Schlitten in die Pfeilrichtungen P4, P5, P6 verfahrbar sind. Zur Steuerung der Linearantriebe 63 ist eine Steuereinheit 64 vorgesehen, die im dargestellten Ausführungsbeispiel als eine CNC-Steuereinheit 641 ausgestaltet ist. Der stationäre Teil 55 weist die erste Achse 591 auf, auf der der erste Schlitten 621 verfahrbar angeordnet ist. Der erste Schlitten 621 trägt die zweite Achse 592, auf der der zweite Schlitten 622 verfahrbar angeordnet ist. Der zweite Schlitten 622 trägt die dritte Achse 593, auf der der dritte Schlitten 623 verfahrbar angeordnet ist und der den Werkzeugadapter 571 trägt.

Der stationäre Teil 55 weist eine vierte Achse 594 auf, die parallel zu der ersten Achse 591 angeordnet und zur Führung des beweglichen Teils 56 des Gestells 54 ausgebildet ist. Dabei sind die erste Achse 591 und die vierte Achse 594 über zwei voneinander beabstandete Streben 65 miteinander verbunden.

Die Werkzeugmaschine 100 weist einen 3-D-Taster 66 auf, der eingerichtet und ausgerichtet ist, um die Diaphragma-Dichtung 50 und die Oberfläche des Flansches 51 und die Dichtfläche des Flansches 51 abzutasten.

Zur mittelbaren Montage der Werkzeugmaschine 100 an dem Flansch ist ein Rahmen 67 vorgesehen, der mittels mehrerer radial beweglich gelagerter Stempel 68 unmittelbar am Flansch 51 verspannbar ist.

Im montierten Zustand der Werkzeugmaschine 100 ist die Diaphragma-Platte 52 und die vollständige Oberfläche des Flansches 51 innerhalb des Bearbeitungsraums 60 angeordnet.

Die Spindeldrehzahl des Werkzeugträgers 57 ist variabel und zwischen 0,1 U/min und 24.000 U/min einstellbar.

Der Werkzeugadapter 571 weist zur Einstellung der Spindeldrehzahl ein Getriebe 69 auf.

Die Steuereinheit 64, die hier als CNC-Steuereinheit 641 ausgestaltet ist, ist auch zur Regelung der Spindeldrehzahl eingerichtet.

Die Werkzeugmaschine 100 ist drahtlos mit einer Steuereinrichtung 70 verbunden.

Die Werkzeuge 58, die von dem Werkzeugadapter 571 aufnehmbar sind, sind als Frässpindel 581 oder als Schweißvorrichtung ausgebildet, wobei die Frässpindel 581 zur Aufnahme eines Fräskopfes und einer Gewindefräse ausgebildet ist und die Schweißvorrichtung zum Auftragsschweißen ausgebildet ist.

### Bezugszeichen

- 10: mobile Maschine
- 11: Schweißnaht
- 12: Diaphragma-Dichtung
- 13: stationärer Teil
- 14: rotierender Teil
- 15: ausrichtet Element
- 16: Stehbolzen
- 17: Diaphragma-Platte
- 18: Flansch
- 19: Werkzeughalter
- 20: Drehmeißel
- 21: Antriebseinheit
- Pn: Pfeilrichtung (n = 1,..., 3)

- 100: Werkzeugmaschine
- 50: Diaphragma-Dichtung
- 51: Flansch
- 52: Diaphragma-Platte
- 53: Schweißnaht
- 54: Gestell
- 55: stationärer Teil
- 56: beweglicher Teil
- 57: Werkzeugträger
- 571: Werkzeugadapter
- 58: Werkzeug
- 581: Frässpindel
- 591: Achse
- 592: Achse
- 593: Achse
- 594: Achse
- 60: Bearbeitungsraum
- 61: Linearführung
- 621: Schlitten
- 622: Schlitten
- 623: Schlitten
- 63: Linearantrieb
- 64: Steuereinheit
- 641: CNC-Steuereinheit
- 65: Strebe
- 66: 3-D-Taster
- 67: Rahmen
- 68: Stempel
- 69: Getriebe
- 70: Steuereinheit
- K: Koordinatensystem
- Pm: Pfeilrichtung (m = 4,..., 6)

## Patentansprüche

1. Werkzeugmaschine (100) zur Bearbeitung, insbesondere zur Instandsetzung, einer Diaphragma-Dichtung (50) eines Flansches (51), die im montierten Zustand eine Diaphragma-Platte (52) aufweist, die mittels einer Schweißnaht (53) an einer Dichtfläche des Flansches (51) fixiert ist, mit einem Gestell (54), das einen stationären Teil (55) und einen beweglichen Teil (56) umfasst, wobei der stationäre Teil (55) zur mittelbaren oder unmittelbaren Montage der Werkzeugmaschine (100) an dem Flansch (51) ausgebildet ist und an dem beweglichen Teil (56) ein Werkzeugträger (57) angeordnet ist, **dadurch gekennzeichnet, dass** der Werkzeugträger (57) als Werkzeugadapter (571) zur Aufnahme unterschiedlicher Werkzeuge (58) ausgebildet ist und das Gestell (54) mehrere Achsen (591, 592, 593, 594) aufweist, die einen Bearbeitungsraum (60) aufspannen, jeweils als Linearführung (61) ausgebildet sind und über mehrere verfahrbare Schlitten (621, 622, 623) derart zueinander ausgerichtet und miteinander verbunden sind, dass der Werkzeugadapter (571) im montierten Zustand der Werkzeugmaschine (100) innerhalb des Bearbeitungsraums (60) entlang einer beliebigen dreidimensionalen Trajektorie verfahrbar ist.

2. Werkzeugmaschine (100) nach Anspruch 1, wobei das Gestell (54) mindestens drei Achsen (591, 592, 593) aufweist, die vorzugsweise jeweils parallel zu den Achsen (x, y, z) eines kartesischen Koordinatensystems (K) angeordnet sind, dessen x-y-Ebene im montierten Zustand der Werkzeugmaschine (100) vorzugsweise parallel zur Dichtfläche des Flansches (51) ausgerichtet ist.

3. Werkzeugmaschine (100) nach einem der vorhergehenden Ansprüche, wobei die Schlitten (621, 622, 623) jeweils separate Linearantriebe (63) aufweisen.

4. Werkzeugmaschine (100) nach Anspruch 3, wobei zur Steuerung der Linearantriebe (63) eine Steuereinheit (64), insbesondere eine CNC-Steuereinheit (641), vorgesehen ist.

5. Werkzeugmaschine (100) nach einem der vorhergehenden Ansprüche, wobei der stationäre Teil (55) die erste Achse (591) aufweist, auf der der erste Schlitten (621) verfahrbar angeordnet ist, der erste Schlitten (621) die zweite Achse (592) trägt, auf der der zweite Schlitten (622) verfahrbar angeordnet ist, und der zweite Schlitten (622) die dritte Achse (593) trägt, auf der der dritte Schlitten (623) verfahrbar angeordnet ist und der den Werkzeugadapter (571) trägt.

6. Werkzeugmaschine (100) nach einem der vorhergehenden Ansprüche, wobei der stationäre Teil (55) eine vierte Achse (594) aufweist, die parallel zu der ersten Achse (591) angeordnet und zur Führung des beweglichen Teils (56) des Gestells (54) ausgebildet ist, wobei die erste Achse (591) und die vierte Achse (594) vorzugsweise über zwei voneinander beabstandete Streben (65) miteinander verbunden sind.

7. Werkzeugmaschine (100) nach einem der vorhergehenden Ansprüche, wobei die Werkzeugmaschine (100) einen 3-D-Taster (66) aufweist, der eingerichtet und ausgerichtet ist, um die Diaphragma-Dichtung (50) und/oder die Oberfläche des Flansches (51) und/oder die Dichtfläche des Flansches (51) abzutasten.

8. Werkzeugmaschine (100) nach einem der vorhergehenden Ansprüche, wobei zur mittelbaren Montage der Werkzeugmaschine (100) an dem Flansch (51) ein Rahmen (67) vorgesehen ist, der mittels mehrerer radial beweglich gelagerter Stempel (68) zumindest mittelbar am Flansch (51) verspannbar ist.

9. Werkzeugmaschine (100) nach einem der vorhergehenden Ansprüche, wobei im montierten Zustand der Werkzeugmaschine (100) zumindest die Diaphragma-Platte (52), vorzugsweise die vollständige Oberfläche des Flansches (51) innerhalb des Bearbeitungsraums (60) angeordnet ist.

10. Werkzeugmaschine (100) nach einem der vorhergehenden Ansprüche, wobei die Spindeldrehzahl des Werkzeugträgers (57) variabel ist und vorzugsweise zwischen 0,1 U/min und 24.000 U/min, vorzugsweise zwischen 0,1 U/min und 7.200 U/min, einstellbar ist.

11. Werkzeugmaschine (100) nach einem der vorhergehenden Ansprüche, wobei der Werkzeugadapter (571) zur Einstellung der Spindeldrehzahl ein Getriebe (69) aufweist.

12. Werkzeugmaschine (100) nach einem der Ansprüche 10 oder 11, wobei die Steuereinheit (64), insbesondere die CNC-Steuereinheit (641), zur Regelung der Spindeldrehzahl eingerichtet ist.

13. Werkzeugmaschine (100) nach einem der vorhergehenden Ansprüche, wobei die Werkzeugmaschine (100) drahtlos oder kabelgebundenen mit einer Steuereinrichtung (70) verbindbar ist.

14. Werkzeugmaschine (100) nach einem der vorhergehenden Ansprüche, wobei die Werkzeuge (58), die von dem Werkzeugadapter (571) aufnehmbar sind, als Frässpindel (581) und/oder als Schweißvorrichtung ausgebildet sind, wobei die Frässpindel (581) vorzugsweise zur Aufnahme eines Fräskopfes und/oder einer Gewindefräse ausgebildet ist und die Schweißvorrichtung vorzugsweise zum Auftragsschweißen ausgebildet ist.
